# EUROPÄISCHE PATENTANMELDUNG

(11) **EP 1 876 194 A1**
(43) Veröffentlichungstag der Anmeldung: **09.01.2008**
(21) Anmeldenummer: 06116369.7
(22) Anmeldetag: 30.06.2006
(51) Int. Cl.: C08G 18/00, C08G 59/20, C08K 3/04, C08K 3/34, C08L 63/00

(54) **Hitzehärtende Zusammensetzung geeignet zum Verkleben von beschichteten Substraten**

(71) Anmelder: Sika Technology AG, 6340 Baar (CH)
(72) Erfinder: Schulenburg, Jan Olaf, 8037, Zürich (CH); Rheinegger, Urs, 8049, Zürich (CH); Hofstetter, David, 8405, Winterthur (CH); Finter, Jürgen, 8037, Zürich (CH)

(57) **Zusammenfassung**

Die Erfindung betrifft hitzehärtende Zusammensetzungen, welche mindestens ein Epoxidharz A mit durchschnittlich mehr als einer Epoxidgruppe pro Molekül, mindestens ein Schlagzähigkeitsmodifikator B, mindestens ein Rissförderer C sowie mindestens einen Härter D für Epoxidharze, welcher durch erhöhte Temperatur aktiviert wird, umfassen. Als Rissförderer C sind insbesondere Schichtsilikate, wie Glimmer oder Talk, und Graphit geeignet. Die Erfindung erlaubt es auf beschichteten Substraten höhere Energien vom Verbund aufzunehmen als ohne Rissförderer.

## Beschreibung

### Technisches Gebiet

Die Erfindung betrifft das Gebiet der hitzehärtenden Epoxidharz Zusammensetzung mit erhöhter Schlagzähigkeit.

### Stand der Technik

In der Fertigung sowohl von Fahrzeugen und Anbauteilen oder auch Maschinen und Geräten werden anstelle oder in Kombination mit herkömmlichen Fügeverfahren wie Schrauben, Nieten, Stanzen oder Schweißen immer häufiger hochwertige Klebstoffe eingesetzt. Werden strukturelle Teile verklebt, sind eine hohe Festigkeit und Schlagzähigkeit des Klebstoffes von grösster Wichtigkeit.

Herkömmliche Epoxyklebstoffe zeichnen sich zwar durch eine hohe mechanische Festigkeit, insbesondere eine hohe Zugfestigkeit aus. Bei schlagartiger Beanspruchung der Verklebung sind klassische Epoxyklebstoffe jedoch meist zu spröde und können deshalb unter Crashbedingungen, bei denen sowohl grosse Zug- als auch Schälbeanspruchungen auftreten, den Anforderungen, insbesondere der Automobilindustrie, bei weitem nicht genügen. Ungenügend sind diesbezüglich oft besonders die Festigkeiten bei hohen, insbesondere aber auch bei tiefen Temperaturen unter-10°C.

Deshalb wurde mittels verschiedener Methoden angestrebt, die Schlagzähigkeit von hitzehärtenden Epoxyklebstoffen zu verbessern.

EP-A-1 359 202 beschreibt eine Verbesserung der Schlagzähigkeit durch die Verwendung eines Harnstoffderivates in einem nicht-diffundierenden Trägermaterial sowie schlagzähe Zusammensetzungen, welche dieses Harnstoffderivat sowie Epoxid-Addukte enthalten. EP-A-1 431 325 sowie EP-A-1 498 441 beschreibt die Verwendung von Epoxidgruppen-terminierten Schlagzähigkeitsmodifkator-Polymere sowie schlagzähe Zusammensetzungen, welche diese Schlagzähigkeitsmodifkator-Polymere enthalten. Diese Zusammensetzungen weisen hohe Schlagzähigkeiten auf, zeigen jedoch im Verbund mit beschichteten Substraten vielfach Probleme auf, indem bei Schlagbeanspruchung frühzeitig ein Bruch innerhalb dieser Schicht, beziehungsweise zwischen der Schicht und dem darunter liegenden Substrat, erfolgt. Beschichtete Substrate, insbesondere beschichtete Metalle und Legierungen werden jedoch vor allem in industriellen Prozessen breit eingesetzt. Insbesondere verzinkte Metalle und Legierungen sind bekannt dafür, dass sie aufgrund ihrer Zinkbeschichtung schwierig zu schlagzähen Verbundteilen zu verkleben sind.

### Darstellung der Erfindung

Aufgabe der vorliegenden Erfindung ist es daher, hitzehärtende Epoxidharz-Zusammensetzungen zur Verfügung zu stellen, welche insbesondere bei strukturellen Verklebungen von beschichteten Substraten eine starke Verbesserung der Schlagzähigkeit des Verbundes gegenüber den Zusammensetzungen des Standes der Technik zeigen.

Überraschenderweise wurde nun gefunden, dass eine hitzehärtende Zusammensetzung gemäss Anspruch 1 dieses Problem zu lösen vermag. Insbesondere wurde gefunden, dass der Bruch bei einer schlagartigen Krafteinwirkung auf den Verbund dieser Zusammensetzungen mit beschichteten Materialien, insbesondere von verzinkten Metallen und Legierungen, vorwiegend innerhalb der ausgehärteten Zusammensetzung und nicht innerhalb der Beschichtungsschicht oder zwischen Beschichtung und dem darunter liegendem Substrat erfolgt. Somit sind mit derartigen beschichteten Substraten Verbunde mit höherer Schlagzähigkeit realisierbar als mit herkömmlichen crashfesten Strukturklebstoffen.

Weitere Aspekte der Erfindung stellen die Verwendung derartiger Zusammensetzungen als einkomponentiger Strukturklebstoff, das Verfahren zum Verkleben gemäss Anspruch 11 und 12, sowie die so hergestellten verklebten Artikel gemäss Anspruch 20 dar.

Bevorzugte Ausführungen der Erfindung sind Gegenstand der abhängigen Ansprüche.

### Wege zur Ausführung der Erfindung

Die Erfindung betrifft eine hitzehärtende Zusammensetzung, welche mindestens ein Epoxidharz **A** mit durchschnittlich mehr als einer Epoxidgruppe pro Molekül, mindestens einen Schlagzähigkeitsmodifikator **B**, mindestens ein Rissförderer **C**, sowie mindestens einen Härter **D** für Epoxidharze, welcher durch erhöhte Temperatur aktiviert wird, umfasst.

Die hitzehärtende Zusammensetzung enthält mindestens ein Epoxidharz **A** mit durchschnittlich mehr als einer Epoxidgruppe pro Molekül. Die Epoxidgruppe liegt vorzugsweise als Glycidylethergruppe vor. Insbesondere liegt das Epoxidharz **A als** Glycidylether eines Polyphenols vor, bevorzugt als Diglycidylether eines Bis-Phenol-A oder Bisphenol-F, oder deren Oligomeren. Besonders bevorzugt ist das Epoxidharz **A** ein sogenanntes Epoxid-Flüssigharz.

In der gesamten hier vorliegenden Schrift werden mit der Vorsilbe "Poly" in Begriffen wie "Polyphenol" "Polyisocyanat", "Polyol", "Polyurethan", "Polyether", "Polyglycidylethern", "Polyester", "Polycarbonat" oder "Polyamin" Moleküle bezeichnet, die formal zwei oder mehr der jeweiligen funktionellen Gruppen enthalten.

Die Struktur derartiger bevorzugter Diglycidylether zeigt Formel (I).

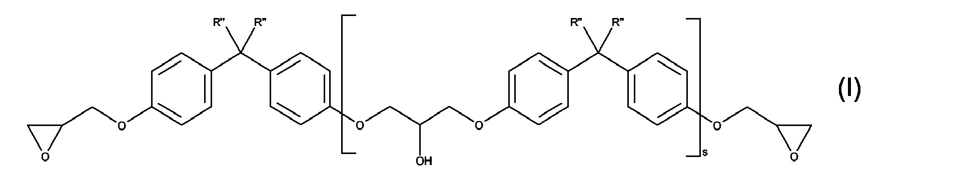

Hierbei stehen die Substituenten R" für ein Wasserstoffatom oder eine Methylgruppe. Bei Flüssigharzen beträgt der Polymerisationsgrad s in Formel (I) typischerweise zwischen 0.05 und 0.20. Solche Flüssigharze sind kommerziell erhältlich. Typische Handelsprodukte sind beispielsweise Araldite® GY 250, Araldite® PY 304, Araldite® GY 282 (Huntsman) oder D.E.R 331 (Dow) oder Epikote 828 (Resolution).

Durch die Herstellungsverfahren dieser Harze bedingt, ist klar, dass in den Flüssigharzen auch höher molekulare Bestandteile enthalten sind.

Weiterhin ist es auch möglich, dass zusätzlich zu einem derartige Flüssigharz ein höhermolekulares Epoxy-Festharz der Formel (I) mit einem Polymerisationsgrad s von typischerweise einem Wert zwischen 2 und 12, vorhanden ist. Es versteht sich, dass stets eine Molekulargewichtsverteilung vorliegt. Derartige Epoxy-Festharze sind kommerziell beispielsweise von Dow oder Huntsman oder Resolution erhältlich.

Das Epoxidharz **A** mit durchschnittlich mehr als einer Epoxidgruppe pro Molekül ist bevorzugt in einer Menge von 20 - 55 Gew.-%, insbesondere von 25 - 35 Gew.%, in der hitzehärtenden Zusammensetzung vorhanden.

Die hitzehärtende Zusammensetzung enthält mindestens einen Schlagzähigkeitsmodifikator **B.** "Schlagzähigkeitsmodifikatoren" sind organische Verbindungen, welche die Schlagzähigkeit der Zusammensetzung, welcher sie zugegeben werden, verbessern. Eine einen Schlagzähigkeitsmodifikator enthaltende Zusammensetzung wird deshalb bei der Einwirkung einer schlagartigen Krafteinwirkung weniger geschädigt als die entsprechende Zusammensetzung ohne Schlagzähigkeitsmodifikator.

Dem Fachmann sind eine ganze Reihe derartiger Schlagzähigkeitsmodifikatoren bekannt. Als Schlagzähigkeitsmodifikator **B** ist insbesondere ein Schlagzähigkeitsmodifikator **B** geeignet, welcher ausgewählt ist aus der Gruppe bestehend aus
- Core-Shell-Copolymere,
- Blockcopolymere, erhalten aus der Polymerisation von mit mindestens zwei ungesättigten Monomeren,
- Harnstoffderivate in einem Trägermittel
- Kautschuken, insbesondere Flüssigkautschuken, bevorzugt reaktiven Flüssigkautschuken,

Core-Shell-Polymer bestehen aus einem elastischen Kernpolymer und einem starren Schalen-Polymer. Insbesondere geeignete Core-Shell-Polymere bestehen aus einem Kern (Core) aus vernetztem elastischem Acrylat- oder Butadien-Polymer, welche auf eine starre Schale (Shell) eines starren thermoplastischen Polymers aufgepropft ist.

Bevorzugte Core-Shell-Polymere sind sogenannte MBS Polymere, welche kommerziell unter dem Handelsnamen Clearstrength^{™} von Atofina oder Paraloid^{™} von Rohm and Haas erhältlich sind.

Blockcopolymere lassen sich durch radikalische oder anionische Polymerisation herstellen.

Einerseits sind speziell geeignete Blockcopolymere solche, welche aus einer anionischen oder kontrollierten radikalischen Polymerisation von Methacrylsäureester mit mindestens einem weiteren, eine olefinisch ungesättigte Doppelbindung aufweisenden, Monomeren entstehen. Als olefinisch ungesättigte Doppelbindung aufweisende Monomere sind insbesondere solche, bei denen die Doppelbindung unmittelbar mit einem Heteroatom oder mit mindestens einer weiteren Doppelbindung konjugiert sind. Insbesondere sind Monomere geeignet, welche ausgewählt sind aus der Gruppe umfassend Styrol, Butadien, Acrylonitril und Vinylacetat. Derartige Blockcopolymer sind insbesondere Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

Andererseits sind speziell geeignete Blockcopolymere Styrol-Blockcopolymere, das heisst, solche Copolymere, welche aus Styrol als Monomer mindestens aus einem weiteren Alken oder konjugierten Dialkylen als Monomer hergestellt sind. Dieses weitere Alken oder konjugierte Dialkylen ist vorzugsweise Butadien, Isopren, Ethylen oder Propylen, bevorzugt Butadien oder Isopren. Besonders bevorzugte derartige Blockcopolymere sind Blockcopolymere, welche einen Styrol/Butadien/Styrol (SBS)- und/oder Styrol/Isopren/Styrol (SIS)- und/oder Styrol/Ethylen/Butylen/Styrol (SEBS)- und/oder Styrol/Ethylen/Propylen/Styrol (SEPS)- Block, bevorzugt einen Styrol/Butadien/Styrol (SBS)- und/oder Styrol/Isopren/Styrol (SIS)- Block, aufweisen. Bevorzugte derartige Blockcopolymere sind diejenigen, welche von KRATON Polymers unter den Handelsnamen Kraton^{®} kommerziell erhältlich sind, insbesondere aus der Kraton^{®} D- und Kraton^{®} G- Produktelinie, bevorzugt aus der Kraton^{®} D- Produktelinie.

Geeignete Harnstoffderivate in einem Trägermittel sind insbesondere Umsetzungsprodukte eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenyl-methylen-diisocyanat (MDI) mit Butylamin erwiesen.

Das Harnstoffderivat ist in einem Trägermaterial vorhanden. Das Trägermaterial kann ein Weichmacher, insbesondere ein Phthalat oder ein Adipat sei, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration von nicht regierten Bestandteilen nach der Aushärtung zu gewährleisten. Bevorzugt sind als nichtdiffundierende Trägermittel blockierte Polyurethanprepolymere.

Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanprepolymer, insbesondere erhalten durch Umsetzung eines trifunktionellen Polyetherpolyols mit IPDI und anschliessender Blockierung der endständigen Isocyanatgruppen mit Caprolactam.

Als Kautschuke sind neben natürlichen Kautschuken insbesondere auch synthetische Kautschuke geeignet. Besonders geeignete Kautschuke sind Flüssigkautschuke. Bevorzugte Kautschuke sind reaktive Flüssigkautschuke. Derartige reaktive Flüssigkautschuke weisen reaktive Gruppen auf. Als besonderes bevorzugt haben sich reaktive Flüssigkautschuke mit Epoxygruppen, insbesondere mit Glycidylethergruppen, erwiesen.

Beispiele für geeignete Flüssigkautschuke sind einerseits Carboxylgruppen- oder Epoxygruppen- terminierte Butadien/Acrylnitril-Copolymere, wie sie unter der Produkte-Reihe Hycar^{®} CTB, Hycar^{®} CTBN, Hycar^{®} CTBNX oder Hycar^{®} ETBN von BFGoodrich^{®}, beziehungsweise von Noveon, kommerziell angeboten werden. Bevorzugt können auch Addukte der Amingruppen-terminerten Butadien/Acrylnitril-Copolymere, wie sie unter der Produkte-Reihe Hycar^{®} ATB und Hycar^{®} ATBN von BFGoodrich^{®}, beziehungsweise von Noveon, kommerziell angeboten werden, mit Polyglycidylethern verwendet werden.

Weitere Bespiele für geeignete Flüssigkautschuke sind Phenolterminierte Prepolymere, wie sie beispielsweise in EP-A-0 338 995, insbesondere auf Seite 13, Zeile 25 bis Seite 15, oder in WO 2005/007766, insbesondere auf Seite 17, Zeile 25 bis Seite 18, beschrieben sind.

Weitere Beispiele für reaktive Flüssigkautschuke sind Phenol-, Amino-, Isocyanat- oder Epoxy-Endgruppen aufweisende Prepolymere, wie sie beispielsweise in EP-A-0 353 190, insbesondere auf Seite 9, Zeile 40 bis Seite 10, beschrieben sind.

In einer Ausführungsform sind die reaktive Flüssigkautschuke Epoxygruppen aufweisende Elastomer-modifizierte Prepolymere, wie sie unter unter der Produktelinie Polydis®, insbeondere der Produktelinie Polydis® 36.., von der Firma Struktol® (Schill+Seilacher Gruppe, Deutschland) oder unter der Produktelinie Albipox (Hanse Chemie, Deutschland) kommerziell vertrieben werden.

Die meist bevorzugten reaktiven Flüssigkautschuke mit Epoxy-Gruppen sind diejenigen, welche die Formel (II) aufweisen.

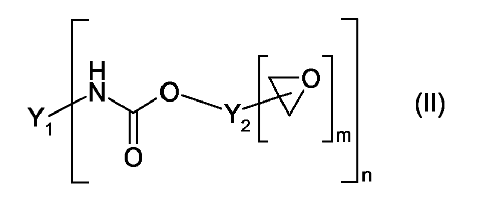

Hierbei stellt Y₁ einen n-wertigen Rest eines mit Isocyanatgruppen terminierten linearen oder verzweigten Polyurethanprepolymeren **PU1** nach dem Entfernen der endständigen Isocyanatgruppen dar. Y₂ steht für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen. Weiterhin stehen die Indizes m für die Werte 1, 2 oder 3 und n für die Werte 2 bis 8.

Polymere der Formel (II) sind beispielsweise erhältlich durch die Reaktion einer Monohydroxyl-Epoxidverbindung der Formel (III) und eines Isocyanatgruppen-terminierten linearen oder verzweigten Polyurethanprepolymeren **PU1** der Formel (IV):

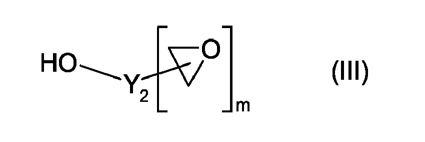

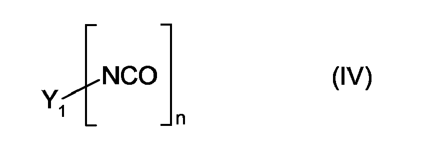

Dieses Polyurethanprepolymer **PU1** wird seinerseits hergestellt aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}.**

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)- bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Als Polymere **Q_{PM}** mit endständigen Amino-, Thiol- oder Hydroxylgruppen sind insbesondere geeignet Polymere **Q_{PM}** mit zwei oder drei endständige Amino-, Thiol- oder Hydroxylgruppen.

Die Polymere **Q_{PM}** weisen vorteilhaft ein Equivalenzgewicht von 600 - 6000, insbesondere von 600 - 4000, bevorzugt von 700 - 2200 g/Equivalent NCO-reaktiver Gruppen auf.

Als Polymere **Q_{PM}** geeignet sind Polyole, beispielsweise die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Speziell geeignet sind Polyoxypropylendiole und -triole mit einem Ungesättigtheitsgrad tiefer als 0.02 mEq/g und mit einem Molekulargewicht im Bereich von 1000 - 30'000 Dalton, Polyoxybutylendiole und -triole, Polyoxypropylendiole und -triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Polyhydroxyterminierte Polybutadienpolyole, wie beispielsweise solche, die durch Polymerisation von 1,3-Butadien und Allylalkohol hergestellt werden, sowie deren Hydryrierungsprodukte;
- Styrol-Acrylnitril gepfropfte Polyetherpolyole, wie sie beispielsweise von Elastogran unter dem Namen Lupranol® geliefert werden;
- Polyhydroxyterminierte Acrylonitril/Polybutadien-Copolymere, wie sie beispielsweise aus Carboxylterminierten Acrylonitril/Polybutadien-Copolymere (kommerziell erhältlich unter dem Namen Hycar® CTBN von BFGoodrich^{®}, beziehungsweise von Noveon) und Epoxiden oder aus Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere **Q_{PM}** di- oder höherfunktioneller Polyole mit OH-Equivalentsgewichten von 600 bis 6000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Polybutadien-co-Acrylnitrilen, hydroxylterminierten synthetischen Kautschuken, deren Hydrierungsprodukte und Gemischen dieser genannten Polyole.

Im Weiteren können als Polymere **Q_{PM}** auch di- oder höherfunktionelle amino-terminierte Polyethylenether, Polypropylenether, Polybutylenether, Polybutadiene, Polybutadien/Acrylnitrile, wie sie zum Beispiel die unter dem Namen Hycar® CTBN von Hanse Chemie AG, Deutschland vertrieben werden, sowie weitere amino-terminierte synthetische Kautschuke oder Gemische der genannte Komponenten verwendet werden.

Für gewisse Anwendungen sind als Polymere **Q_{PM}** insbesondere Hydroxyl-Gruppen aufweisende Polybutadiene oder Polyisoprene oder deren hydrierte Reaktionsprodukte geeignet.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Am Beispiel eines Diisocyanates und eines Diols bildet sich daraus, wie im Folgenden gezeigt, je nach gewählter Stöchiometrie eine Spezies der Formel (V) oder (VI) 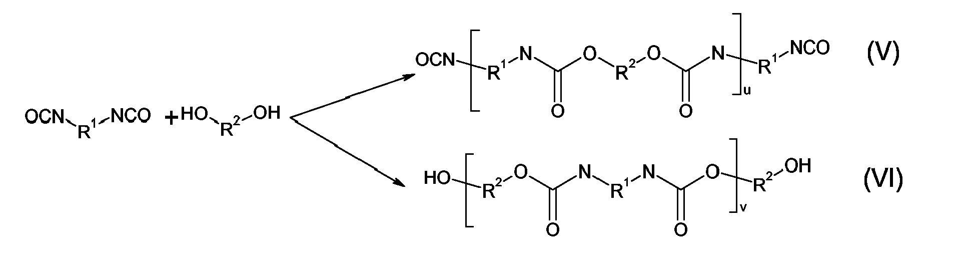 Die Reste R¹ und R² stellen einen divalenten organischen Rest dar und die Indizes v und w variieren je nach Stöchiometrieverhältnis von 1 bis typischerweise 5.

Diese Spezies der Formel (V) oder (VI) können dann wiederum weiterreagiert werden. So kann beispielsweise aus der Spezies der Formel (V) und einem Diol mit einem divalenten organischen Rest R³ ein kettenverlängertes Polyurethanprepolymer **PU1** der folgenden Formel gebildet werden:

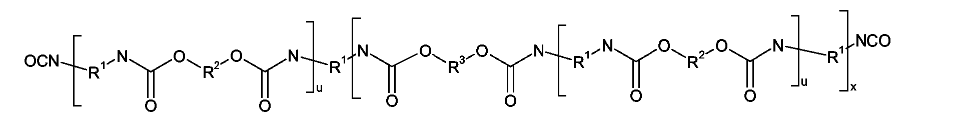

Aus der Spezies der Formel (VI) und einem Diisocyanat mit einem divalenten organischen Rest R⁴ kann ein kettenverlängertes Polyurethan-prepolymer **PU1** der folgenden Formel gebildet werden:

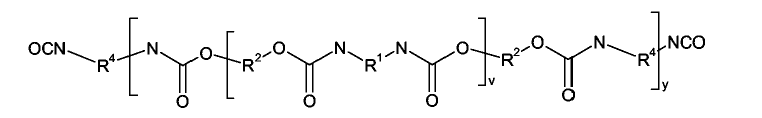

Die Indizes x und y variieren je nach Stöchiometrieverhältnis von 1 bis typischerweise 5, und sind insbesondere 1 oder 2.

Weiterhin kann auch die Spezies der Formel (V) mit der Species der Formel (VI) umgesetzt werden, so dass ein NCO Gruppen aufweisendes kettenverlängertes Polyurethanprepolymer **PU1** entsteht.

Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanten, für die Kettenverlängerung verwendet werden können.

Bei den Polyurethanprepolymeren **PU1** generell und bei den kettenverlängerten Polyurethanprepolymeren im Speziellen ist vorteilhaft darauf zu achten, dass die Prepolymere nicht zu hohe Viskositäten aufweisen, insbesondere wenn höher funktionelle Verbindungen für die Kettenverlängerung eingesetzt werden, denn dies kann deren Umsetzung zu den Polymeren den Formel **B** beziehungsweise die Applikation der Zusammensetzung erschweren.

Als Polymere **Q_{PM}** bevorzugt sind Polyole mit Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Polybutadien-Acrylnitril-Copolymere sowie deren Gemische.

Als Polymere **Q_{PM}** sind insbesondere bevorzugt α,ω-Polyalkylenglykole mit C₂-C₆-Alkylengruppen oder mit gemischten C₂-C₆- Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenole werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Durch die Art und Stellung eines solchen Substituenten wird unter anderem die für die Bildung des Polyurethanprepolymeren **PU1** nötige Reaktion mit Isocyanaten beeinflusst.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), o,o-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2.0 bis 3.5 sowie alle Isomeren der vorgenannten Verbindungen.

Bevorzugte Diphenole und Dikresole hergestellt durch Umsetzung von Phenolen oder Kresolen mit Di-isopropylidenbenzol weisen eine chemische Strukturformel auf, wie sie entsprechend für Kresol als Bespiel nachfolgend gezeigt ist:

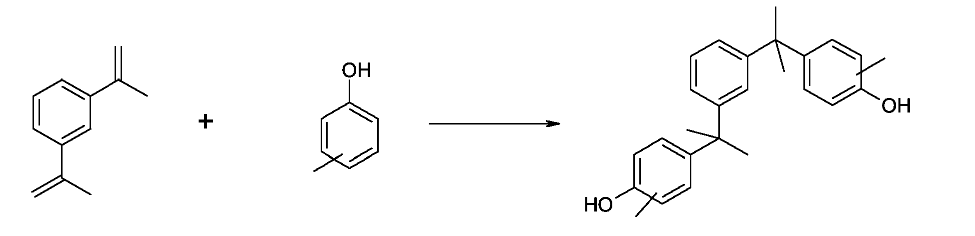

Besonders bevorzugt sind schwerflüchtige Bisphenole. Als meist bevorzugt gelten Bisphenol-M, Bisphenol-S.

Bevorzugt weist das **Q_{PP}** 2 oder 3 phenolische Gruppen auf.

In einer ersten Ausführungsform wird das Polyurethanprepolymer **PU1** aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers **PU1** erfolgt in einer dem Polyurethan-Fachmann bekannten Art und Weise, insbesondere, indem, dass das Diisocyanat oder Triisocyanat in einem stöchiometrischen Überschuss in Bezug auf die Amino, Thiol oder Hydroxylgruppen des Polymeren **Q_{PM}** eingesetzt wird.

In einer zweiten Ausführungsform wird das Polyurethanprepolymer **PU1** aus mindestens einem Diisocyanat oder Triisocyanat sowie aus einem, gegebenenfalls substituierten, Polyphenol **Q_{PP}** hergestellt. Die Herstellung des Polyurethanprepolymers **PU1** erfolgt in einer dem Polyurethan-Fachmann bekannter Art und Weise, insbesondere indem, dass das Diisocyanat oder Triisocyanat in einem stöchiometrischen Überschuss in Bezug auf die phenolischen Gruppen des Polyphenols **Q_{PP}** eingesetzt wird.

In einer dritten Ausführungsform wird das Polyurethanprepolymer **PU1** aus mindestens einem Diisocyanat oder Triisocyanat sowie aus einem Polymeren **Q_{PM}** mit endständigen Amino-, Thiol- oder Hydroxylgruppen sowie aus einem, gegebenenfalls substituierten, Polyphenol **Q_{PP}** hergestellt. Zur Herstellung des Polyurethanprepolymers **PU1** aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** stehen unterschiedliche Möglichkeiten zur Verfügung.

In einem ersten Verfahren, "Eintopfverfahren" genannt, wird eine Mischung von mindestens einem Polyphenol **Q_{PP}** und mindestens einem Polymeren **Q_{PM}** mit mindestens einem Diisocyanat oder Triisocyanat in einem Isocyanatüberschuss umgesetzt.

In einem zweiten Verfahren, "2-Schrittverfahren I" genannt, wird mindestens ein Polyphenol **Q_{PP}** mit mindestens einem Diisocyanat oder Triisocyanat in einem Isocyanatüberschuss umgesetzt und anschliessend mit mindestens einem Polymeren **Q_{PM}** in Unterschuss umgesetzt.

Im dritten Verfahren schliesslich, "2-Schrittverfahren **II"** genannt, wird mit mindestens ein Polymer **Q_{PM}** mit mindestens einem Diisocyanat oder Triisocyanat in einem Isocyanatüberschuss umgesetzt und anschliessend mit mindestens einem Polyphenol **Q_{PP}** in Unterschuss umgesetzt.

Die drei Verfahren führen zu Isocyanat-terminierten Polyurethanprepolymeren **PU1,** die sich bei gleicher Zusammensetzung in der Sequenz ihrer Bausteine unterscheiden können. Es sind alle drei Verfahren geeignet, jedoch ist das "2-Schrittverfahren II" bevorzugt.

Werden die beschriebenen Isocyanat-endständigen Polyurethanprepolymeren **PU1** aus difunktionellen Komponenten aufgebaut, zeigte sich, dass das Equivalenz-Verhältnis Polymer **Q_{pM}**/Polyphenol **Q_{PP}** bevorzugt grösser als 1.50 und das Equivalenz-Verhältnis Polyisocyanat/(Polyphenol **Q_{PP}** + Polymer **Q_{PM})** bevorzugt grösser als 1.20 ist.

Wird die durchschnittliche Funktionalität der verwendeten Komponenten grösser als 2, so erfolgt eine raschere Molekulargewichtserhöhung als im rein difunktionellen Fall. Für den Fachmann ist klar, dass die Grenzen der möglichen Equivalenz-Verhältnisse stark davon abhängen, ob entweder das gewählte Polymer **Q_{PM},** das Polyphenol **Q_{PP},** das Diisocyanat oder Triisocyanat oder mehrere der genannten Komponenten eine Funktionalität >2 besitzen. Je nach dem können unterschiedliche Equivalenz-Verhältnisse eingestellt werden, deren Grenzen durch die Viskosität der resultierenden Polymere bestimmt wird und die experimentell von Fall zu Fall bestimmt werden müssen.

Das Polyurethanprepolymer **PU1** weist bevorzugt elastischen Charakter auf und zeigt eine Glasumwandlungstemperatur Tg von kleiner als 0°C.

Die Monohydroxyl-Epoxidverbindung der Formel (III) weist 1, 2 oder 3 Epoxidgruppen auf. Die Hydroxylgruppe dieser Monohydroxyl-Epoxidverbindung (III) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (VII), der in handelsüblichen flüssigen Epoxidharzen hergestellt aus Bisphenol-A (R = CH₃) und Epichlorhydrin zu etwa 15 % enthalten ist, sowie die entsprechenden β-Hydroxyether der Formel (VII), die bei der Reaktion von Bisphenol-F (R = H) oder des Gemisches von Bisphenol-A und Bisphenol-F mit Epichlorhydrin gebildet werden.

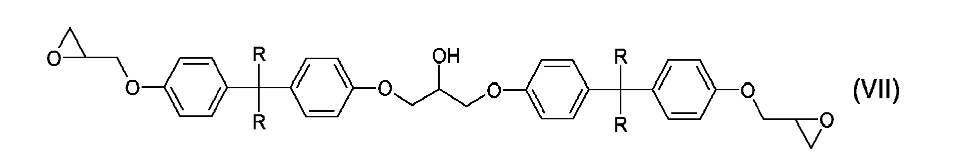

Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Die freie primäre oder sekundäre OH-Funktionalität der Monohydroxyl-Epoxidverbindung der Formel (III) lässt eine effiziente Umsetzung mit terminalen Isocyanatgruppen von Prepolymeren zu, ohne dafür unverhältnismässige Überschüsse der Epoxidkomponente einsetzen zu müssen.

Zur Umsetzung der Polyurethanprepolymeren **PU1** der Formel (IV) können stöchiometrische Mengen Monohydroxyl-Epoxidverbindung der Formel (III) oder ihrer Mischungen eingesetzt werden. Von der Stöchiometrie in Bezug auf dessen Equivalente OH-Gruppen respektive Isocyanatgruppen kann abgewichen werden. Das Verhältnis [OH]/[NCO] beträgt 0.6 bis 3.0, vorzugsweise 0.9 bis 1.5, insbesondere 0.98 bis 1.1.

Als Schlagzähigkeitsmodifikator **B** ist bevorzugt ein Schlagzähigkeitsmodifikator **B** der Formel (II).

Der Schlagzähigkeitsmodifikator **B** ist bevorzugt in einer Menge von 5 - 45 Gew.-%, insbesondere von 20 - 35 Gew.-% in der hitzehärtenden Zusammensetzung vorhanden.

Die hitzehärtende Zusammensetzung enthält weiterhin mindestens einen Rissförderer **C**.

Als Rissförderer wird im vorliegenden Dokument eine bei Raumtemperatur feste Substanz verstanden, welche aufgrund ihrer eigenen Kohäsionskräfte, welche geringer sind als die Kohäsionskräfte des mit Härter **D** ausgehärteten Epoxidharzes A, ab einer Grenzkonzentration des Rissförderers in der Zusammensetzung die Kohäsionskräfte der ausgehärteten Zusammensetzung herabzusetzen vermag. Unterhalb dieser Grenzkonzentration wirkt diese Substanz als Füllstoff.

Die Grenzkonzentration ist abhängig von der als Rissförderer betrachten Substanz. Typischerweise ist diese Grenzkonzentration dieser Substanz 0.25 Gew.-% oder mehr, bezogen auf die gesamte Zusammensetzung.

Als Rissförderer **C** sind grundsätzlich diverse feste Substanzen, wie beispielsweise auch feste Polymere, wie beispielsweise Polyethylen-Flocken oder -Fasern, geeignet.

In einer ersten bevorzugten Ausführungsform ist der Rissförderer C ein Schichtsilikat. Schichtsilikate (Phyllosilicate) weisen Schichten aus [SiO₄]-Tetraedern auf, in welchen jeweils ein [SiO_{4]}-Tetraeder über drei Ecken an die drei benachbarten [SiO₄]-Tetraedern gebunden sind. Zwischen diesen Schichten sind Kationen eingelagert. Es kann zwischen zwei, drei oder vier Schichten unterschieden werden. Aufgrund dieser Schicht- oder Blattstruktur lassen sich Schichtsilikate leicht entlang dieser Schichten spalten.

Als Sichtsilikate sind insbesondere Talk, die Schichtsilikate der Glimmergruppe sowie der Chlorit-Gruppe bevorzugt. Insbesondere handelt es sich um Glimmer, Talk, IIIit, Kaolinit, Montmorillonit, Muskovit sowie Biotit.

In einer zweiten bevorzugten Ausführungsform ist der Rissförderer **C** Graphit. Graphit ist eine Modifikation des Kohlenstoffs. Graphit weist einen Schichtenaufbau auf. Da die einzelnen Schichten nicht kovalent miteinander verbunden sind, lassen sich die einzelnen Schichten leicht verschieben oder trennen.

In einer dritten bevorzugten Ausführungsform ist der Rissförderer **C** ein bei Raumtemperatur festes Polyamin oder Polyaminoamide. Bevorzugt weisen sie einen Erweichungspunkt über 100°C, bevorzugt zwischen 100°C und 120°C. Als besonders geeignet haben sich Polyaminoamide vom Typ wie sie unter dem Handelsnamen Aradur HT 939 EN (CAS-Nr. [68003-28-1]) von Huntsman vertrieben werden. Es ist wesentlich, dass der Rissförderer fest ist. Flüssige Polyamine oder Polyaminoamide ergeben keine Reduktion der Kohäsionskräfte der ausgehärteten Zusammensetzung.

Meist bevorzugt ist der Rissförderer **C** Graphit oder ein Schichtsilikat, insbesondere Graphit oder Glimmer oder Talk. Meist bevorzugt ist der Rissförderer **C** Talk.

Für die Erfindung ist von besonders grossem Vorteil, wenn der Rissförderer **C** einen schichtartigen Aufbau aufweist. Zwischen diese Schichten wirken nur kleine Kräften und lassen sich demzufolge leicht, d.h. ohne grossen Kraftaufwand, entlang dieser Schichten spalten.

Der Rissförderer **C** ist bevorzugt in einer Menge von 0.25 - 25 Gew.- %, insbesondere von 1 - 25 Gew.-%, bevorzugt 2 - 15 Gew.-%, in der hitzehärtenden Zusammensetzung vorhanden. Falls es sich beim Rissförderer **C** um ein Schichtsilikat handelt, ist er bevorzugt in einer Menge von 6 und 25 Gew.-%, insbesondere 8 - 25 Gew.-%, in der hitzehärtenden Zusammensetzung vorhanden. Falls es sich beim Rissförderer **C** um Graphit handelt, ist er bevorzugt in einer Menge von 0.25 - 8 Gew.-%, insbesondere 1 - 5 Gew.-%, in der hitzehärtenden Zusammensetzung vorhanden.

Die hitzehärtende Zusammensetzung enthält weiterhin mindestens einen Härter **D** für Epoxidharze, welcher durch erhöhte Temperatur aktiviert wird, umfasst. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind katalytisch wirksame substituierte Harnstoffe wie 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden. Besonders bevorzugt ist Dicyandiamid.

Der Härter **D** ist bevorzugt in einer Menge von 1 - 10 Gewichts-%, vorzugsweise 2 - 6 Gewichts-% in der hitzehärtenden Zusammensetzung vorhanden.

Die Zusammensetzung kann weitere Bestandteile umfassen. Derartige Bestandteile sind insbesondere epoxidgruppentragende Reaktivverdünner, Katalysatoren, Hitze- und/oder Lichtstabilisatoren, Thixotropiermittel, Weichmacher, Lösungsmittel, Farbstoffe und Pigmente sowie Füllstoffe umfassen.

In einer weiteren bevorzugten Ausführungsform enthält die Zusammensetzung zusätzlich mindestens einen epoxidgruppentragenden Reaktivverdünner. Bei diesen Reaktivverdünnern handelt es sich insbesondere um:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenolglycidylether, Kresolglycidylether, p-tert.-Butylphenolglycidylether, Nonylphenolglycidylether, 3-n-Pentadecenyl-phenolglycidylether, 3-n-Pentadeca(8,11)dienyl-phenolglycidylether (aus Cashewnuss-Schalen-Öl), N,N-Diglycidylanilin etc.
- Epoxidierte Tertiäre Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Polypropylenglycoldiglycidylether und Polyethylenglycoldiglycidylether und 3-n-Pentadecenyl-phenolglycidylether, insbesondere wie er unter dem Handelsnamen Cardolite® LITE 2513HP oder NC-513 (CAS-Nr. [68413-24-1]) von Cardolite Europe N.V., Belgien, vertrieben wird.

Vorteilhaft beträgt der Gesamtanteil des epoxidgruppentragenden Reaktivverdünners 1 - 15 Gewichts-%, vorzugsweise 2 - 10 Gewichts-%, bezogen auf das Gewicht der gesamten Zusammensetzung.

Es hat sich gezeigt, dass die beschriebenen hitzehärtenden Zusammensetzungen sich als einkomponentige Strukturklebstoffe verwenden lassen. Diese Klebstoffe weisen eine erhöhte Schlagzähigkeit auf. In einem derartigen Verfahren wird die Oberfläche dieser Materialien mit einer vorgängig beschriebenen Zusammensetzung kontaktiert werden und umfasst einen Schritt des Aushärtens.

Die Erfindung umfasst des Weiteren auch ein Verfahren zur Verklebung von Substraten **S1** und **S2,** welches die Schritte umfasst:
- Applikation einer vorgängig beschriebenen Zusammensetzung auf ein Substrat **S1** und/oder ein Substrat **S2,**
- Kontaktieren der Substrate **S1** und **S2** über die applizierte Zusammensetzung,
- Erhitzen der Zusammensetzung auf eine Temperatur von 100-220 °C, vorzugsweise 120 - 200°C.

Die Substrate **S1** und **S2** können hierbei gleich oder verschieden voneinander sein.

Besonders bevorzugt ist hierbei mindestens eines der Substrate **S1** oder **S2** ein Faserwerkstoff, insbesondere eine Carbonfaser-verstärkter Kunststoff (CFK) oder ein Glasfaser-verstärkter Kunststoff (GFK), Glas, Glaskeramik, ein Metall oder eine Legierung.

Insbesondere bevorzugt ist das mindestens eine Substrat **S1** oder **S2** Eisen, ein Leichtmetall, insbesondere Aluminium oder Magnesium, ein Buntmetall oder Legierungen daraus.

In einer bevorzugten Ausführungsform ist das mindestens eine Substrat **S1** oder **S2** ein Metall oder eine Legierung ist, welche eine Bandbeschichtung (Coil Coating) aufweist.

In einer weiteren bevorzugten Ausführungsform ist das mindestens eine Substrat **S1** oder **S2** ein Metall oder eine Legierung, dessen oder deren Oberfläche mit einer chemischen Vorbehandlung, insbesondere mit einer chemischen Vorbehandlung zur Steigerung der Korrosionsbeständigkeit, modifiziert worden ist. Eine derartige chemische Vorbehandlung ist typischerweise ein Galvanisierungsprozess. Als Substrat dessen Oberfläche mit einer chemischen Vorbehandlung modifiziert worden ist, ist insbesondere ein verzinktes Substrat zu verstehen. Insbesondere handelt es sich hierbei um eine Verzinkung durch Feuerverzinkung, elektrolytische Verzinkung, Bonazink, Galvalume, Galfan, Galvannealed verzinkt.

Bevorzugt als Substrat, dessen Oberfläche mit einer chemischen Vorbehandlung modifiziert worden ist, wird ein feuerverzinkter Stahl, Bonazink-Stahl, Galvalume-Stahl, ein Galfan-Stahl oder Galvannealed-Stahl, insbesondere ein feuerverzinkter Stahl, elektrolytisch verzinkter Stahl, Bonazink-Stahl oder Galvannealed-Stahl. Als meist bevorzugtes Substrat S1 oder S2 ist Galvannealed-Stahl.

Galvannealed-Stahl ist ein Stahl, welcher durch ein Verfahren gewonnen wird, bei welchem ein galvanisierter Stahl nach dem Galvanisieren in einem weiteren Verfahrensschritt bei Temperaturen oberhalb des Schmelzpunktes von Zink geglüht (annealing) wird.

Insbesondere können durch Prozessfehler im Herstellen von Beschichtungen bedingt Fehler im Schichtenaufbau entstehen, was sich in einer Verminderung der Schichtenkohäsion oder -adhäsion auftritt, was sich bei Schlagbeanspruchung wiederum in vermehrtem Schichtenbruch oder Schichtdelamination manifestiert.

Es hat sich nämlich gezeigt, dass derartige beschichtete oder vorbehandelte Metalloberflächen vielfach eine geringere oder reduzierte mechanische Festigkeit oder Haftung zum Metall aufweisen. Es hat sich weiterhin gezeigt, dass, wenn derartige Substrate mit klassischen schlagzähen Klebstoffen verklebt werden, bei einer schlagartigen Krafteinwirkung der Klebverbund bereits bei relativ geringen Kräften versagt, indem ein Bruch innerhalb der Oberflächenschicht oder zwischen der Oberflächenschicht und dem Metalluntergrund entsteht.

Es ist eine Schlüsseleigenschaft der erfindungsgemässen Zusammensetzungen, dass der Bruch innerhalb des Klebstoffs erfolgt und der Verbund somit in der Lage ist, grössere Kräfte im Verbundkörper absorbieren zu können, ohne dass der Verbund durch Delamination oder Schichtbruch zerstört wird. Dies ist umso überraschender, als dass die mechanische Eigenschaften des Klebstoffs, d.h. nicht in einem Klebverbund betrachtet, durch die Verwendung des Rissförderers C in der Zusammensetzung reduziert werden.

Somit ist der Klebstoff, beziehungsweise der damit verklebte Verbundkörper, in der Lage grössere Schläge aufzunehmen, als es mit herkömmlichen crashfesten Strukturklebstoffen der Fall ist, ohne dass die Verklebung zerstört wird. Die erfindungsgemässen Klebstoffe sind bevorzugt "crashfest". Als crashfeste Klebstoffe werden solche bezeichnet, welche Dynamische Spaltwiderstände (Dynamic Resistance to Cleavage) von mindestens 18 N/mm, insbesondere von mindestens 20 N/mm, aufweisen.

Einen weiteren Aspekt der Erfindung bildet somit auch ein verklebter Artikel, welcher mittels eines oben beschriebenen Verfahrens zur Verklebung hergestellt wird. Da dieses Verfahren insbesondere in der industriellen Fertigung verwendet wird sind die verklebten Artikel insbesondere Weisswaren oder Transportmittel, insbesondere Fahrzeuge zu Wasser oder zu Lande, bevorzugt ein Automobil, ein Bus, ein Lastkraftwagen, ein Zug oder ein Schiff, oder ein Teil davon.

Wie aus dem Vorherigen hervorgeht, wurde zudem gefunden, dass die Verwendung eines beschriebenen Rissförderers **C**, dazu geeignet ist eine Erhöhung der Kraftübertragung zu erhalten, wenn bei schlagartiger mechanischer Krafteinwirkung zwischen über einen Klebstoff miteinander verbundenen Fügepartnern einwirkt, wobei zumindest einer dieser Fügepartner vor dem Verkleben beschichtet ist oder durch eine chemische Vorbehandlung modifiziert worden ist, und dessen Beschichtung oder Oberflächennahe Schicht eine geringe Kohäsion oder geringe Adhäsion zum Träger aufweist und wobei ein allfälliger durch die schlagartige mechanische Krafteinwirkung verursachter Bruch kohäsiv im Klebstoff erfolgt.

Es wurde gefunden, dass dies nicht nur auf hitzehärtende Epoxidharz-zusammensetzungen zutrifft, sondern auch bei anderen Klebstoffsystemen, wie beispielsweise auch Polyurethan- und (Meth)acrylat-Klebstoffen, beobachtet werden kann. Bei Epoxydharz-Klebstoffen, insbesondere hitzehärtenden Epoxidharz, tritt dieser Effekt allerdings besonders gut zu Tage.

### Beispiele

Im Folgenden sollen einige Beispiele aufgezeigt werden, welche die Erfindung weiter veranschaulichen, den Umfang der Erfindung aber in keiner Weise beschränken sollen. Die in den Beispielen verwendeten Rohstoffe sind in Tabelle 1 aufgelistet.

**Tabelle1. Eingesetzte Rohstoffe.**

| **Verwendete Rohstoffe** | **Lieferant** |
|---|---|
| PolyTHF-1800 (Difunktionelles Polybutylenglykol) (OH-Equivalentgewicht = 900 g/OH-Equivalent) | BASF |
| Poly bd® R45 HTLO ((Hydroxylterminertes Polybutadien) (OH-Equivalentgewicht = ca. 1200 g/OH-Equivalent) | Arkema |
| Alcupol® D-2021 (Difunktionelles Polypropylenglykol) (OH-Equivalentgewicht = 1000 g/OH-Equivalent) | Repsol |
| Isophoron-diisocyanat (=IPDI) | Degussa-Hüls |
| Desmophen 3060 BS (Trifunktionelles Polypropylenglykol) (OH-Equivalentgewicht = 1000 g/OH-Equivalent) | Bayer |
| Caprolactam | EMS Chemie |
| 4,4'-Diphenyl-methylen-diisocyanat (=MDI) | Bayer |
| N-Butylamin | BASF |
| Bisphenol-A-diglycidylether (=DGEBA) | Huntsman |
| Araldite® GT 7071 (=GT 7071) | Huntsman |
| Polydis® 3611 | Struktol |
| Aradur HT 939 EN | Huntsman |
| Dicyandiamid (=Dicy) | Degussa |
| Hexandioldiglycidylether (=HDDGE) | Prümmer |

### Beispielhafte Herstellung eines monohydroxylhaltigen Epoxides "MHE"

Trimethylolpropanglycidylether wurde gemäss dem Verfahren in Patent US 5,668,227, Beispiel 1 aus Trimethylolpropan und Epichlorhydrin mit Tetramethylammoniumchlorid und Natronlauge hergestellt. Man erhält ein gelbliches Produkt mit Epoxidzahl von 7.5 eq/kg und einem Hydroxylgruppengehalt von 1.8 eq/kg. Aus dem HPLC-MS Spektrum kann geschlossen werden, dass im Wesentlichen ein Gemisch von Trimethylolpropandiglycidylether und Trimethylolpropantriglycidylether vorliegt.

### Herstellung eines Beispiels für einen Epoxygruppen aufweisenden Flüssigkautschuk als Schlagzähigkeitsmodifikator B: Beispiel B-01

80 g PolyTHF-1800 (OH-Zahl 62.3 mg/g KOH), 55 g Poly-bd® R-45HTLO (OH-Zahl 46.6 mg/g KOH) und 65 g Alcupol D2021 (OH-Zahl 56.0 mg/g KOH) wurden 30 Minuten unter Vakuum bei 100°C getrocknet. Anschliessend wurden 46.2 g IPDI und 0.04 g Dibutylzinndilaurat zugegeben. Die Reaktion wurde unter Vakuum bei 90°C bis zur Konstanz des NCO-Gehaltes bei 3.44% nach 2.5 h geführt (theoretischer NCO-Gehalt: 3.6%). Anschliessend wurden 117.6 g des oben beschriebenen Trimethylolpropanglycidylethers als monohydroxylhaltiges Epoxid der Formel (III) zugegeben. Es wurde bei 90°C unter Vakuum weitergerührt, bis der NCO-Gehalt nach weiteren 3h unter 0.1 % gesunken war. So wurde ein klares Produkt mit einem Epoxid-Gehalt ("End-EP-Gehalt") von 2.47 eq/kg erhalten

### Herstellung eines Beispiels für ein Harnstoffderivat in einem Trägermittel als Schlagzähigkeitsmodifikator B: Beispiel B-02

Als Beispiel für ein Harnstoffderivat auf Basis eines Harnstoffderivates in einem nicht-diffundierenden Trägermaterial wurde gemäss Patentanmeldung EP 1 152 019 A1 in einem blockierten Polyurethan-Prepolymer mit oben erwähnten Rohstoffen hergestellt:

### Trägermaterial: Blockiertes Polyurethanprepolymer "BlockPUP"

600.0 g eines Polyetherpolyols (Desmophen 3060BS; 3000 Dalton; OH-Zahl 57 mg/g KOH) wurden unter Vakuum und Rühren bei 90°C mit 140.0 g IPDI und 0.10 g Dibutylzinndilaurat zum Isocyanat-terminierten Prepolymer umgesetzt. Die Reaktion wurde bis zur Konstanz des NCO-Gehaltes bei 3.41% nach 2.5 h geführt (theoretischer NCO-Gehalt: 3.60%). Anschliessend wurden die freien Isocyanatgruppen bei 90°C unter Vakuum mit 69.2g Caprolactam (2% Überschuss) blockiert, wobei ein NCO-Gehalt von < 0.1% nach 3h erreicht wurde.

### Harnstoffderivat ("HSD") in blockiertem Polyurethan-Prepolymer.

Unter Stickstoff und leichtem Wärmen wurden 68.7 g MDI-Flocken in 181.3 g des oben beschriebenen blockierten Prepolymeres *"BlockPUP"* eingeschmolzen. Danach wurden während zwei Stunden unter Stickstoff und schnellem Rühren 40.1 g N-Butylamin gelöst in 219.9 g des oben beschriebenen blockierten Prepolymers *"BlockPUP"* zugetropft. Nach Beendigung der Zugabe der Aminlösung wurde die weisse Paste für weitere 30 Minuten weitergerührt. So wurde nach dem Abkühlen eine weisse, weiche Paste erhalten, welche einen freien Isocyanatgehalt von < 0.1% aufwies (Anteil Harnstoffderivat ca. 21%).

### Herstellung der Zusammensetzungen

Es wurden gemäss Tabelle 2 die Referenzzusammensetzungen ***Ref.1*** und ***Ref.* 2** sowie die erfindungsgemässe Zusammensetzungen ***Z-1*** bis ***Z7*** hergestellt.

### Prüfmethoden:

- Zugfestigkeit (ZF): gemessen nach ISO 527 mit 2 mm/min.
- Bruchdehnung (BD): gemessen nach ISO 527 mit 2 mm/min.
- E-Modul (0.5-1%) gemessen nach ISO 527 mit 2 mm/min.
- Zugscherfestigkeit (ZSF) (DIN EN 1465)
Die Probekörper wurden aus den beschriebenen Beispiel-Zusammensetzungen und mit elektrolytisch verzinktem Stahl (eloZn)(H320) mit dem Mass 100 x 25 x 1.5 mm hergestellt, dabei betrug die Klebfläche 25 x 10 mm bei einer Schichtdicke von 0.3mm. Gehärtet wurde 30 Min. bei 180°C. Die Zuggeschwindigkeit betrug 10mm/Min.
- Dynamischer Spaltwiderstand ("DSW(GA)") und -Energie ("DSE(GA)")(ISO 11343)
Die Probekörper wurden aus den in Tabelle 2 beschriebenen Zusammensetzungen und zwei Galvannealed-Stahl (GA)-Platten mit dem Massen 90 x 20 x 0.8 mm hergestellt, dabei betrug die Klebfläche 30 x 20mm bei einer Schichtdicke von 0.3 mm. Gehärtet wurde 30 Min. bei 180°C. Die Auftreffgeschwindigkeit des Keils betrug 2 m/s. Das Bruchbild des Verbundköpers wurde nach der Schlagbeanspruchung visuell begutachtet und der Anteil kohäsiver Bruch im Klebstoff ("CF") und Delamination der Zinkschicht vom Untergrund("ZvU") bestimmt.

**Tabelle 2. Zusammensetzungen und Resultate.* GA=Galvannealed-Stahl, **ZvU=Delaminaton der Zinkschicht vom Untergrund,***CF=kohäsiver Klebstoffbruch.**

| | ***Ref.1*** | ***Ref.2*** | ***Z1*** | ***Z2*** | ***Z3*** | ***Z4*** | ***Z5*** | ***Z6*** | ***Z7*** |
|---|---|---|---|---|---|---|---|---|---|
| DGEBA (**A**)[g] | 12.8 | 13.4 | 12.8 | 13.4 | 13.4 | 13.4 | 13.4 | 13.4 | 13.4 |
| GT 7071 (**A**)[g] | 19.2 | 20.1 | 19.2 | 20.1 | 20.1 | 20.1 | 20.1 | 20.1 | 20.1 |
| *B-01* (**B**)[g] | 13 | 15 | 13 | 15 | 15 | 15 | 15 | 15 | 15 |
| *HSD* (**B**) [g] | 2.34 | 3.41 | 2.34 | 3.41 | 3.41 | 3.41 | 3.41 | 3.41 | 3.41 |
| *BlockPUP* [g] | 8.66 | 12.59 | 8.66 | 12.59 | 12.59 | 12.59 | 12.59 | 12.59 | 12.59 |
| Polydis®3611 (**B**)[g] | | | | | 10 | | | | 10 |
| Talk (**C**)[g] | | | 10 | 10 | 10 | | | | |
| Glimmer (**C**)[g] | | | | | | | | | 10 |
| Graphit (**C**)[g] | | | | | | 10 | 3 | | |
| Aradur HT939 EN (**C**) [g] | | | | | | | | 3 | |
| Dicyandiamid (**D**)[g] | 3 | 3.3 | 3 | 3.3 | 3.3 | 3.3 | 3.3 | 2.1 | 3.3 |
| HDDGE [g] | 7 | 8 | 7 | 8 | 8 | 8 | 8 | 8 | 8 |
| Füllstoffgemisch [g] | 21 | 24 | 11 | 14 | 14 | 14 | 21 | 24 | 14 |
| ZF [MPa] | 32 | 27 | 34 | 26 | 21 | 26 | 22 | 20 | 24 |
| BD [%] | 12 | 12 | 12 | 12 | 10 | 9 | 9 | 16 | 16 |
| E-Modul(0.5-1 %)[MPa] | 1169 | 1040 | 1224 | 1000 | 830 | 770 | 880 | 700 | 890 |
| ZSF [MPa] | 29 | 29 | 29 | 24 | 23 | 19 | 24 | 29 | 28 |
| DSW (GA*) [N/mm] | 3.9 | 9.8 | 18.3 | 18.4 | 19.7 | 11.2 | 18.7 | 21.2 | 21.6 |
| DSE (GA*) [J] | 1.3 | 3.9 | 6.4 | 6.7 | 7.8 | 3.3 | 7.5 | 8.4 | 8.3 |

| Bruchbild (GA*) | | | | | | | | | |
|---|---|---|---|---|---|---|---|---|---|
| ZvU**[%] | 100 | 100 | 10 | 1 | 0 | 0 | 0 | 60 | 50 |
| CF***[%] | 0 | 0 | 90 | 99 | 100 | 100 | 100 | 40 | 50 |

Die Resultate zeigen deutlich, dass die Beispiele **Z1** bis **Z7** gegenüber den Referenzbeispielen ***Ref.1*** und ***Ref.2*** deutlich höhere Dynamische Spaltwiderstände und -Energien aufweisen. Die Resultate der Tabelle 2 zeigen zudem dass durch den Einsatz der Rissförderer **C** der Klebstoff verstärkt kohäsiv bricht, insbesondere wenn Graphit oder Talk als Rissförderer **C** eingesetzt wird.

## Patentansprüche

1. Hitzehärtende Zusammensetzung umfassend
mindestens ein Epoxidharz **A** mit durchschnittlich mehr als einer Epoxidgruppe pro Molekül;
mindestens ein Schlagzähigkeitsmodifikator **B;**
mindestens ein Rissförderer **C;**
mindestens einen Härter **D** für Epoxidharze, welcher durch erhöhte Temperatur aktiviert wird.

2. Hitzehärtende Zusammensetzung gemäss Anspruch 1, **dadurch gekennzeichnet, dass** ein Epoxidharz **A** ein Diglycidylether, insbesondere ein Diglycidylether eines Bisphenols, bevorzugt ein Bisphenol-A-Diglycidylether, ist.

3. Hitzehärtende Zusammensetzung gemäss Anspruch 1 oder 2, **dadurch gekennzeichnet, dass** der Schlagzähigkeitsmodifikator **B** ausgewählt ist aus der Gruppe bestehend aus
- Kautschuken, insbesondere Flüssigkautschuken, bevorzugt reaktiven Flüssigkautschuken,
- Core-Shell-Copolymere,
- Blockcopolymere, erhalten aus der Polymerisation von mit mindestens zwei ungesättigten Monomeren,
- Harnstoffderivate in einem Trägermittel.

4. Hitzehärtende Zusammensetzung gemäss Anspruch 3, **dadurch gekennzeichnet, dass** der Schlagzähigkeitsmodifikator **B** ein reaktiver Flüssigkautschuk mit Epoxy-Gruppen der Formel (I) ist 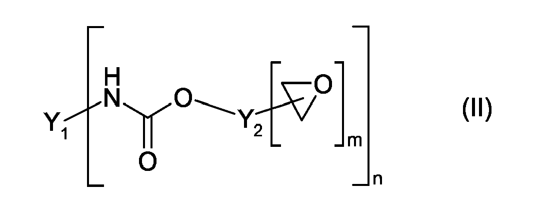 wobei
Y₁ für einen n-wertigen Rest eines mit Isocyanatgruppen terminierten linearen oder verzweigten Polyurethanprepolymeren **PU1** nach dem Entfernen der endständigen Isocyanatgruppen steht;
Y₂ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
m = 1, 2 oder 3 ist;
n=2 bis 8 ist;

5. Hitzehärtende Zusammensetzung gemäss einem der vorhergehenden Ansprüche, **dadurch gekennzeichnet, dass** die Zusammensetzung 5 - 45 Gew.-%, insbesondere 20 - 35 Gew.-%, an Schlagzähigkeitsmodifikator **B** enthält.

6. Hitzehärtende Zusammensetzung gemäss einem der vorhergehenden Ansprüche, **dadurch gekennzeichnet, dass** der Rissförderer **C** ein Schichtsilikat, bevorzugt Glimmer oder Talk, ist.

7. Hitzehärtende Zusammensetzung gemäss einem der Ansprüche 1 - 5, **dadurch gekennzeichnet, dass** der Rissförderer **C** Graphit ist.

8. Hitzehärtende Zusammensetzung gemäss einem der Ansprüche 1 - 5, **dadurch gekennzeichnet, dass** der Rissförderer **C** ein bei Raumtemperatur festes Poylamin oder Polyaminoamid, bevorzugt ein Polyaminoamid, ist.

9. Hitzehärtende Zusammensetzung gemäss einem der vorhergehenden Ansprüche, **dadurch gekennzeichnet, dass** die Zusammensetzung 0.25 - 25 Gew.-%, insbesondere 1 - 25 Gew.-%, bevorzugt 2 - 15 Gew.-%, an Rissförderer **C** enthält.

10. Verwendung einer hitzehärtenden Zusammensetzung gemäss einem der Ansprüche 1 - 9 als einkomponentiger Strukturklebstoff.

11. Verfahren zum Verkleben von hitzestabilen Materialien, insbesondere von Metallen, **dadurch gekennzeichnet, dass** die Oberfläche dieser Materialien mit einer Zusammensetzung gemäss einem der Ansprüche 1 bis 10 kontaktiert werden und einen Schritt des Aushärtens umfasst.

12. Verfahren der Verklebung von Substraten **S1** und **S2** umfassend die Schritte
- Applikation einer Zusammensetzung gemäss einem der Ansprüche 1 bis 9 auf ein Substrat **S1** und/oder ein Substrat **S2,**
- Kontaktieren der Substrate **S1** und **S2** über die applizierte Zusammensetzung,
- Erhitzen der Zusammensetzung auf eine Temperatur von 100-220 °C, vorzugsweise 120 - 200°C,
wobei die Substrate **S1** und **S2** gleich oder verschieden voneinander sind.

13. Verfahren gemäss Anspruch 12, **dadurch gekennzeichnet, dass** mindestens eines der Substrate **S1** oder **S2** ein Faserwerkstoff, insbesondere eine Carbonfaser-verstärkter Kunststoff (CFK) oder ein Glasfaser-verstärkter Kunststoff (GFK), Glas, Glaskeramik, ein Metall oder eine Legierung.

14. Verfahren gemäss Anspruch 12 oder 13, **dadurch gekennzeichnet, dass** das mindestens eine Substrat **S1** oder **S2** Eisen, ein Leichtmetall, insbesondere Aluminium oder Magnesium, ein Buntmetall oder Legierungen daraus ist.

15. Verfahren gemäss Anspruch 12, 13 oder 14, **dadurch gekennzeichnet, dass** mindestens eines der Substrate **S1** oder **S2** ein Metall oder eine Legierung ist, dessen oder deren Oberfläche mit einer chemischen Vorbehandlung, insbesondere mit einer chemischen Vorbehandlung zur Steigerung der Korrosionsbeständigkeit, modifiziert worden ist.

16. Verfahren gemäss Anspruch 15, **dadurch gekennzeichnet, dass** die chemische Vorbehandlung ein Galvanisierungsprozess ist.

17. Verfahren gemäss Anspruch 15 oder 16, **dadurch gekennzeichnet, dass** das Substrat, dessen Oberfläche mit einer chemischen Vorbehandlung modifiziert worden ist, ein verzinktes Substrat ist, insbesondere durch Feuerverzinkung, elektrolytische Verzinkung, Bonazink, Galvalume, Galfan, Galvannealed verzinkt.

18. Verfahren gemäss einem der Ansprüche 15 bis 17, **dadurch gekennzeichnet, dass** das Substrat, dessen Oberfläche mit einer chemischen Vorbehandlung modifiziert worden ist, ein feuerverzinkter Stahl, Bonazink-Stahl, Galvalume-Stahl, ein Galfan-Stahl oder Galvannealed-Stahl, insbesondere ein feuerverzinkter Stahl, elektrolytisch verzinkter Stahl, Bonazink-Stahl oder Galvannealed-Stahl, bevorzugt ein Galvannealed-Stahl, ist.

19. Verfahren gemäss Anspruch 12, 13 oder 14, **dadurch gekennzeichnet, dass** das mindestens eine Substrat **S1** oder **S2** ein Metall oder eine Legierung ist, welche eine Bandbeschichtung (Coil Coating) aufweist.

20. Verklebter Artikel, welcher mittels eines Verfahrens zur Verklebung gemäss einem der Ansprüche 11 bis 19 hergestellt wird.

21. Verklebter Artikel gemäss Anspruch 20, **dadurch gekennzeichnet, dass** der Artikel eine Weissware oder ein Transportmittel, insbesondere ein Fahrzeug zu Wasser oder zu Lande, bevorzugt ein Automobil, ein Bus, ein Lastkraftwagen, ein Zug oder ein Schiff, oder ein Teil davon, ist.

22. Verwendung eines Rissförderers **C**, wie er in einem der Ansprüche 1 bis 9 beschrieben ist, zur Erhöhung der Kraftübertragung bei schlagartiger mechanischer Krafteinwirkung zwischen über einen Klebstoff miteinander verbundenen Fügepartnern,
wobei zumindest einer dieser Fügepartner vor dem Verkleben beschichtet ist oder durch eine chemische Vorbehandlung modifiziert worden ist, und dessen Beschichtung oder Oberflächennahe Schicht eine geringe Kohäsion oder geringe Adhäsion zum Träger aufweist;
und wobei ein allfälliger durch die schlagartige mechanische Krafteinwirkung verursachter Bruch kohäsiv im Klebstoff erfolgt.
